(19) Europäisches Patentamt
European Patent Office
Office européen des brevets

(11) **EP 4 653 080 A1**

(12) **EUROPEAN PATENT APPLICATION**
published in accordance with Art. 153(4) EPC

(43) Date of publication:
26.11.2025 Bulletin 2025/48

(21) Application number: 24913638.3

(22) Date of filing: 20.12.2024

(51) International Patent Classification (IPC):
*B01J 19/08* (2006.01)   *B01J 8/02* (2006.01)
*B01J 8/06* (2006.01)   *B01J 19/00* (2006.01)
*B01J 19/24* (2006.01)

(52) Cooperative Patent Classification (CPC):
B01J 8/02; B01J 8/06; B01J 19/00; B01J 19/08;
B01J 19/24

(86) International application number:
PCT/KR2024/020826

(87) International publication number:
WO 2025/143695 (03.07.2025 Gazette 2025/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 26.12.2023 KR 20230190927

(71) Applicant: LG CHEM, LTD.
Seoul 07336 (KR)

(72) Inventors:
• CHOI, Jaehoon
  Daejeon 34122 (KR)
• KANG, Mooseong
  Daejeon 34122 (KR)
• KWON, Hyun Jee
  Daejeon 34122 (KR)
• PARK, Hongseok
  Daejeon 34122 (KR)

(74) Representative: Hoffmann Eitle
Patent- und Rechtsanwälte PartmbB
Arabellastraße 30
81925 München (DE)

(54) **ELECTRIC HEATING REACTOR**

(57) The reactor includes: a plurality of reaction tubes, each including a passage formed therein in a length direction, through which a reactant passes; and a power source configured to supply a current to the plurality of reaction tubes to heat the reactant passing through the passage, wherein the plurality of reaction tubes are disposed to offset a resultant force of an electromagnetic force to a value less than or equal to a set value tubes by using the current supplied to the plurality of reaction tubes.

FIG. 1

EP 4 653 080 A1

# Description

## [Technical Field]

**CROSS-REFERENCE TO RELATED APPLICATION**

This application claims priority to and the benefit of Korean Patent Application No. 10-2023-0190927 filed with the Korean Intellectual Property Office on December 26, 2023, the entire contents of which are incorporated herein by reference.

The present disclosure relates to an electric heating reactor, and more particularly, to an electric heating reactor that may be operated for a long time by disposing a reaction tube to offset an electromagnetic force continuously applied to the reaction tube during the operation.

## [Background Art]

In a chemical industry, various facilities (e.g., crackers, reformers, reactors, and boilers) are maintained at a high temperature by using a natural gas as a fuel. However, heating by natural gas combustion is not only inefficient in terms of energy consumption but also a major cause of carbon emissions. Therefore, efforts are being made to replace the heating method by the natural gas combustion with an electric heating method.

As a part of this effort, a technology has been proposed to dispose a plurality of reaction tubes in a row and apply a current in the same direction to the reaction tubes. According to this technology, an attractive force may be generated between reaction tubes adjacent to each other. When the same magnitude of current is applied to the reaction tubes of the same specification, a resultant force applied to the reaction tube disposed in the middle of the plurality of reaction tubes may be zero, and the reaction tubes disposed at both ends of the plurality of reaction tubes may continuously receive the force. For example, according to a conventional naphtha cracking device in which two reaction tubes are disposed to be parallel to each other, a length of the reaction tubes may be about 10 m, a distance between the reaction tubes may be about 0.1 m, a current of 3500 A may be applied thereto, thereby continuously applying a force of about 245 newton (N) to the reaction tubes, which may cause a stress of about 4836 pounds per square inch (psi).

The above information disclosed in this Background section is provided only to assist in a better understanding of the background of the present disclosure, and may therefore include information that is not a part of the prior art already known to those skilled in the art to which the present disclosure pertains.

## [Disclosure]

## [Technical Problem]

The present disclosure attempts to provide an electric heating reactor that may be operated for a long time by optimizing an arrangement of reaction tubes.

## [Technical Solution]

According to an embodiment, provided is an electric heating reactor including: a plurality of reaction tubes, each including a passage formed therein in a length direction, through which a reactant passes; and a power source configured to supply a current to the plurality of reaction tubes to heat the reactant passing through the passage, wherein the plurality of reaction tubes is disposed to offset a resultant force of an electromagnetic force by the current supplied to the plurality of reaction tubes to a set value or less.

The set value may be 10% or less of the electromagnetic force applied by a first reaction tube to a second reaction tube adjacent to the first reaction tube.

The plurality of reaction tubes may be disposed to offset the resultant force of the electromagnetic force by the current applied to the plurality of reaction tubes.

The plurality of reaction tubes may be disposed as at least one module in which the resultant force of the electromagnetic force applied to each of the reaction tubes is offset to the set value or less.

The set value may be 10% or less of the electromagnetic force applied by a first reaction tube disposed inside each module to a second reaction tube adjacent to the first reaction tube.

The plurality of reaction tubes may be disposed as at least one module to offset the resultant force of the electromagnetic force applied to each of the reaction tubes.

The reactor may further include a shielding housing surrounding the reaction tubes included in each module and be configured to block an external electromagnetic force.

Four reaction tubes having the same resistance, the same diameter, and the same length may be included in one module, three of the reaction tubes may be disposed in an equilateral triangular shape, the remaining one reaction tube may be disposed at a center of the equilateral triangle, the three reaction tubes disposed in the equilateral triangular shape may have the same magnitude of current flowing in a first direction, and the one reaction tube disposed at the center may have the same magnitude of the current flowing in a second direction opposite to the first direction.

The reactor may further include a shielding housing surrounding the four reaction tubes included in one module and configured to block an external electromagnetic force.

The shielding housing may be formed in an equilateral triangular shape surrounding the four reaction tubes.

The reactor may include a plurality of modules each including the shielding housing.

The reactor may further include a cooler configured to cool at least one of a pair of conductive sockets.

An amount of heat generated by the reaction tube and an amount of heat generated by the heating element may be controlled by adjusting resistances of the reaction tube and the heating element.

**[Advantageous Effects]**

According to the present disclosure, the reaction tubes may be disposed to offset the resultant force applied to each reaction tube by using the current flowing through the reaction tubes, thereby enabling the long-term operation of the reactor without malfunction.

In addition, the electromagnetic force applied to the reaction tubes may be reduced, thereby extending the reaction tube replacement cycle and lowering the maintenance costs.

In addition, any advantage which may be acquired or inferred from an embodiment of the present disclosure is directly or implicitly disclosed in the detailed description of an embodiment of the present disclosure. That is, various advantages inferred from an embodiment of the present disclosure are disclosed in the detailed description described below.

**[Description of the Drawings]**

Embodiments in the specification may be better understood by reference to the following description in connection with the accompanying drawings in which like reference numerals refer to identical or functionally similar elements.

FIG. 1 is a schematic view showing an electric heating reactor according to an embodiment of the present disclosure.

FIG. 2 is a schematic view showing an arrangement of reaction tubes in the electric heating reactor according to an embodiment of the present disclosure.

FIG. 3 is a schematic view showing a resultant force applied to one reaction tube.

FIG. 4 is a schematic view showing an electric heating reactor according to another embodiment of the present disclosure.

It should be understood that the drawings referenced above are not necessarily drawn to scale, and present a rather simplified representation of various preferred features illustrating the basic principles of the present device. For example, specific design features of the present device, including a specific dimension, orientation, position and shape, are determined in part by the particular intended application and environment of use.

**[Mode for Invention]**

A term used herein is only to describe a specific embodiment, and is not intended to limit the present device. A term of a single number used herein is intended to include its plural number unless the context clearly indicates otherwise. It should also be understood that the terms "include" and/or "including", when used in the specification, specify the presence of the recited features, integers, steps, operations, elements and/or components, and do not exclude the presence or addition of one or more of other features, integers, steps, operations, elements, elements, components and/or groups thereof. The term "and/or" used herein includes any one or all combinations of the associated listed items.

Further, it should be understood that one or more of methods described below or aspects thereof may be executed by at least one controller. A term "controller" may refer to a hardware device including a memory and a processor. The memory may store program instructions, and the processor may be specifically programmed to execute the program instructions to perform one or more processes described below in more detail. **The** controller may control operations of units, modules, components, devices, or the like, as described herein. **It** should also be understood that the methods described below may be executed by an apparatus including the controller in conjunction with one or more other components, as appreciated by those skilled in the art.

**In** addition, the controller of the present disclosure may be implemented as a non-transitory computer-readable recording medium including executable program instructions executed by the processor. An example of the computer-readable recording medium may include a read only memory (ROM), a random access memory (RAM), a compact disk read only memory (CD-ROM), a magnetic tape, a floppy disk, a flash drive, a smart card, or an optical data storage device, and is not limited thereto. **The** computer-readable recording medium may also be distributed throughout a computer network, and the program instructions may thus be stored and executed in a distributed manner, for example, on a telematics server or a controller area network (CAN).

According to the present disclosure, an electric heating reactor includes: a plurality of reaction tubes, each having a passage formed therein in a length direction, through which a reactant passes; and a power source for supplying a current to the plurality of reaction tubes to heat the reactant passing through the passage. The plurality of reaction tubes may be disposed to offset a resultant force of an electromagnetic force to a value less than or equal to a set value by the current applied thereto. The set value may be 10% or less of the electromagnetic force applied by a first reaction tube to a second reaction tube adjacent to the first reaction tube, and is not limited thereto. The plurality of reaction tubes may be disposed to offset the resultant force of the electromagnetic force by using the current applied thereto. The resultant force applied to each reaction tube may be offset and a stress applied to the reaction tubes during an operation of the reactor may thus be offset to zero, thereby enabling a long-term operation without malfunction. In addition, the stress applied to the reaction tube may be reduced, thereby extending a reaction tube replacement cycle and lowering maintenance costs.

In an example, four reaction tubes may be disposed inside one module, three of the reaction tubes may be disposed in an equilateral triangular shape, one of the reaction tubes may be disposed at the center of the equilateral triangle, the three reaction tubes disposed at vertices of the equilateral triangle may have a current flowing in a first direction, and one of the reaction tubes that is disposed at the center may have a current flowing in a second direction opposite to the first direction. Accordingly, the resultant force applied to each of the four reaction tubes may be offset to zero.

In addition, the electric heating reactor may further include a shielding housing surrounding the reaction tubes inside one module and shielding the reaction tubes from an external electromagnetic force. Accordingly, there is no need to consider the electromagnetic force between the modules when arranging the reaction tubes inside the plurality of modules.

Hereinafter, an embodiment of the present disclosure is described in detail with reference to the accompanying drawings.

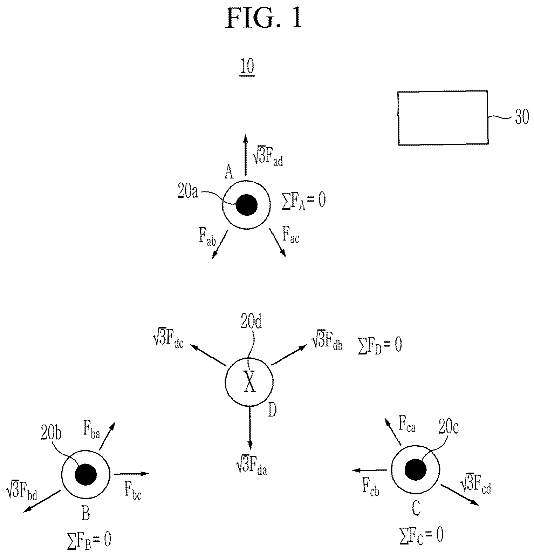

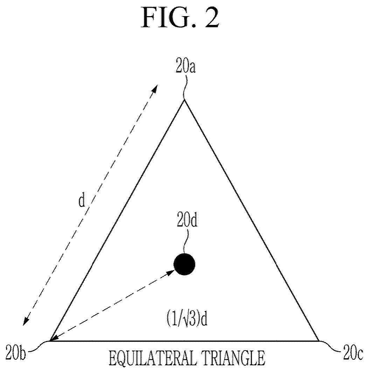

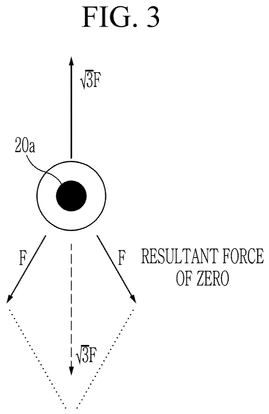

FIG. 1 is a schematic view showing an electric heating reactor according to an embodiment of the present disclosure; FIG. 2 is a schematic view showing an arrangement of reaction tubes in the electric heating reactor according to an embodiment of the present disclosure; and FIG. 3 is a schematic view showing a resultant force applied to one reaction tube.

As shown in FIG. 1, the electric heating reactor 10 according to an embodiment of the present disclosure may receive a current to generate heat and heat a reactant that is required for reaction by using the generated heat. The electric heating reactor 10 may include a plurality of reaction tubes 20 and a power source 30.

The reaction tube 20 may be made of an alloy material having high resistivity (e.g., nickel-chromium (Ni-Cr), iron-chromium (Fe-Cr), iron-nickel-chromium (Fe-Ni-Cr), or iron-chromium-aluminum (Fe-Cr-Al)), and include a passage formed therein in a length direction, through which the reactant passes. For example, the reaction tube 20 may be formed in an annular pipe shape, and a passage may be formed therein in the length direction. However, a shape of the reaction tube 20 is not limited to the annular pipe shape. The reaction tube 20 may have high resistivity. Accordingly, when power is applied to the reaction tube 20, heat may be generated in the reaction tube 20, and heat may be transferred to the reactant inside the passage.

An inlet may be disposed at one end of the reaction tube 20, and the reactant required for reaction may be introduced into the reaction tube 20 through the inlet. An outlet may be disposed at the other end of the reaction tube 20, and a product in which the reaction is completed and/or a reactant that does not undergo the reaction may be discharged from the reaction tube 20 through the outlet.

A plurality of reaction tubes 20a, 20b, 20c, and 20d may be disposed to offset a resultant force of an electromagnetic force applied to each of the reaction tubes 20a, 20b, 20c, and 20d. The plurality of reaction tubes 20a, 20b, 20c, and 20d may continuously receive a high current to heat the reactant therein, and the high current may cause the electromagnetic force to be applied between adjacent reaction tubes 20a, 20b, 20c, and 20d. If the electromagnetic force is not offset, the plurality of reaction tubes 20a, 20b, 20c, and 20d may continuously receive a strong electromagnetic force while the reaction of the reactant occurs, and the plurality of reaction tubes 20a, 20b, 20c, and 20d may be deformed by the electromagnetic force. In order to prevent the deformation of the plurality of reaction tubes 20a, 20b, 20c, and 20d, the plurality of reaction tubes 20a, 20b, 20c, and 20d may be disposed to offset the resultant force of the electromagnetic force applied to each of the reaction tubes 20a, 20b, 20c, and 20d to a value less than or equal to a set value. The set value may be 10% or less of the electromagnetic force applied by the first reaction tube 20a to the second reaction tube 20b adjacent to the first reaction tube 20a, and is not limited thereto. The plurality of reaction tubes 20a, 20b, 20c, and 20d may be disposed to offset the resultant force of the electromagnetic force by using the current applied thereto.

For example, as shown in FIG. 2, the four reaction tubes 20a, 20b, 20c, and 20d having the same resistance value, the same diameter, and the same length may be disposed inside one module. Among the four reaction tubes 20a, 20b, 20c, and 20d, the three reaction tubes (i.e., the first, second, and third reaction tubes 20a, 20b, and 20c) may be disposed in an equilateral triangular shape, and one reaction tube (i.e., the fourth reaction tube 20d) may be disposed at the center of the equilateral triangle. Assuming that d refers to a distance between the first, second, and third reaction tubes 20a, 20b, and 20c, which are disposed at vertices of the equilateral triangle, $(1/\sqrt{3})d$ refers to a distance between one of the first, second, and third reaction tubes 20a, 20b, and 20c and the fourth reaction tube 20d.

In addition, the first, second, and third reaction tubes 20a, 20b, and 20c may have the same current flowing in a first direction, and the fourth reaction tube 20d, which is disposed at the center, may have the same current flowing in a second direction opposite to the first direction. As shown in FIG. 3, if F refers to a force applied by the second reaction tube 20b to the first reaction tube 20a, F refers to a force applied by the third reaction tube 20c to the first reaction tube 20a, and $\sqrt{3}F$ refers to a force applied by the fourth reaction tube 20d to the first reaction tube 20a. In this case, $\sqrt{3}\mathbf{F}$ also refers to a resultant force of the force applied by the second reaction tube 20b to the first reaction tube 20a and the force applied by the third reaction tube 20c to the first reaction tube 20a, and its direction is opposite to the direction of the force applied by the fourth reaction tube 20d to the first reaction tube 20a. Accordingly, the resultant force of the electromagnetic force applied by the second, third, and fourth reaction tubes 20b, 20c, and 20d to the first reaction tube 20a may be offset. Similarly, the resultant force of the electromagnetic force applied to each of the four reaction tubes 20a, 20b, 20c, and 20d may be offset.

The power source 30 may supply the current to the reaction tube 20. The power source 30 may be an alternating-current (AC) power source or a direct-current (DC) power source. For example, the power source 30 may supply the same current to the four reaction tubes 20a, 20b, 20c, and 20d, and supply the current in the first direction to the first, second, and third reaction tubes 20a, 20b, and 20c, and supply the current to the fourth reaction tube 20d in the second direction opposite to the first direction. Accordingly, the resultant force of the electromagnetic force applied to each of the four reaction tubes 20a, 20b, 20c, and 20d may be offset.

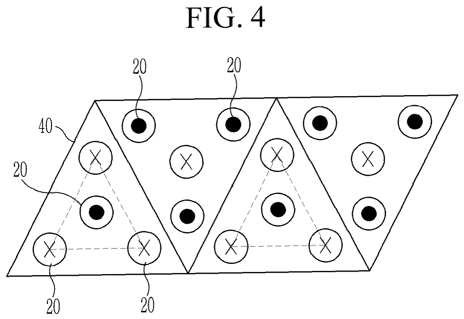

FIG. 4 is a schematic view showing an electric heating reactor according to another embodiment of the present disclosure.

As shown in FIG. 4, the electric heating reactor 10 according to another embodiment of the present disclosure may include a plurality of modules each including the reaction tube 20 therein and the power source 30 according to an embodiment of the present disclosure. Each module may include the four reaction tubes 20 and a shielding housing 40.

In an example, the four reaction tubes 20 inside each module may have the same resistance value, the same diameter, and the same length, and three of the four reaction tubes 20 may be disposed in the equilateral triangular shape, and one of the reaction tubes 20 may be disposed at the center of the equilateral triangle. The three reaction tubes 20 disposed at the vertices of the equilateral triangle may have the same current flowing in the first direction, and one reaction tube disposed at the center may have the same current flowing in the second direction opposite to the first direction. Accordingly, the resultant force of the electromagnetic force applied to each of the four reaction tubes 20 included in each module may be offset.

The shielding housing 40 may surround the reaction tubes 20 inside one module and shield the reaction tubes 20 from an external electromagnetic force. As shown in FIG. 4, the shielding housing 40 may be formed in an equilateral triangular shape surrounding the reaction tubes 20 inside one module, and is not limited thereto. The resultant force of the electromagnetic force applied to each of the reaction tubes 20 included in each module may be offset, and the reaction tubes 20 may be surrounded by the shielding housing 40, thereby preventing the external electromagnetic force from being applied to the reaction tubes 20 inside the shielding housing 40. In addition, when disposing the reaction tubes 20 inside the plurality of modules, there is no need to consider the electromagnetic force applied between the modules, which may facilitate the arrangement of the modules.

In another example, three of the four reaction tubes 20 inside each module may be disposed in a triangular shape, and one of the reaction tubes 20 may be disposed at the center of the triangle. The three reaction tubes 20 disposed at the vertices of the triangle may have the current flowing in the first direction, and one reaction tube disposed at the center may have the current flowing in the second direction opposite to the first direction. In this way, the resultant force of the electromagnetic force applied to each of the four reaction tubes 20 included in each module may be disposed to be offset to the value less than or equal to the set value. The set value may be less than or equal to 10% of the electromagnetic force applied between any one reaction tube 20 disposed at the vertex of the triangle and another one reaction tube 20 disposed at the center, or of the electromagnetic force applied between any two reaction tubes 20 disposed at the vertices of the triangle, and is not limited thereto.

Although the embodiments of the present disclosure have been described hereinabove, the scope of the present disclosure is not limited thereto, and all equivalent modifications that may be easily made by those skilled in the art to which the present disclosure pertains are intended to fall within the scope and spirit of the present disclosure.

## Claims

1. An electric heating reactor comprising:

   a plurality of reaction tubes, each including a passage formed therein in a length direction, through which a reactant passes; and
   a power source configured to supply a current to the plurality of reaction tubes to heat the reactant passing through the passage,
   wherein the plurality of reaction tubes is disposed to offset a resultant force of an electromagnetic force by the current supplied to the plurality of reaction tubes to a set value or less .

2. The reactor of claim 1, wherein
   the set value is 10% or less of the electromagnetic force applied by a first reaction tube to a second reaction tube adjacent to the first reaction tube.

3. The reactor of claim 2, wherein
   the plurality of reaction tubes is disposed to offset the resultant force of the electromagnetic force by the current applied to the plurality of reaction tubes.

**4.** The reactor of claim 1, wherein
the plurality of reaction tubes is disposed as at least one module in which the resultant force of the electromagnetic force applied to each of the reaction tubes is offset to the set value or less.

**5.** The reactor of claim 4, wherein
the set value is 10% or less of the electromagnetic force applied by a first reaction tube disposed inside each module to a second reaction tube adjacent to the first reaction tube.

**6.** The reactor of claim 1, wherein
the plurality of reaction tubes is disposed as at least one module to offset the resultant force of the electromagnetic force applied to each of the reaction tubes.

**7.** The reactor of claim 5, further comprising
a shielding housing surrounding the reaction tubes included in each module and configured to block an external electromagnetic force.

**8.** The reactor of claim 1, wherein

four reaction tubes having the same resistance, the same diameter, and the same length are included in one module,
three of the reaction tubes are disposed in an equilateral triangular shape,
the remaining one reaction tube is disposed at a center of the equilateral triangle,
the three reaction tubes disposed in the equilateral triangular shape have the same magnitude of current flowing in a first direction, and the one reaction tube disposed at the center has the same magnitude of the current flowing in a second direction opposite to the first direction.

**9.** The reactor of claim 8, further comprising
a shielding housing surrounding the four reaction tubes included in one module and configured to block an external electromagnetic force.

**10.** The reactor of claim 9, wherein
the shielding housing is formed in an equilateral triangular shape surrounding the four reaction tubes.

**11.** The reactor of claim 9, comprising
a plurality of modules each including the shielding housing.

**12.** The reactor of claim 1, further comprising
a cooler configured to cool at least one of a pair of conductive sockets.

**13.** The reactor of claim 1, wherein
an amount of heat generated by the reaction tube and an amount of heat generated by the heating element are controlled by adjusting resistances of the reaction tube and the heating element.

# FIG. 1

# FIG. 2

20a

20d

d

$(1/\sqrt{3})d$

20b

EQUILATERAL TRIANGLE

20c

## FIG. 3

FIG. 4

## INTERNATIONAL SEARCH REPORT

| International application No. |
|---|
| **PCT/KR2024/020826** |

### A. CLASSIFICATION OF SUBJECT MATTER

**B01J 19/08**(2006.01)i; **B01J 8/02**(2006.01)i; **B01J 8/06**(2006.01)i; **B01J 19/00**(2006.01)i; **B01J 19/24**(2006.01)i

According to International Patent Classification (IPC) or to both national classification and IPC

### B. FIELDS SEARCHED

Minimum documentation searched (classification system followed by classification symbols)

B01J 19/08(2006.01); B01J 19/24(2006.01); B01J 6/00(2006.01); B01J 8/06(2006.01); F24H 3/00(2006.01); F24H 3/04(2006.01); F27D 11/02(2006.01); H05B 3/02(2006.01); H05B 3/44(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전기 가열 반응기(electrically heated reactor), 튜브(tube), 전자기력(electromagnetic force), 합력(net-force), 차폐 하우징(shielding housing), 삼각(triangle), 냉각기(cooler)

### C. DOCUMENTS CONSIDERED TO BE RELEVANT

| Category* | Citation of document, with indication, where appropriate, of the relevant passages | Relevant to claim No. |
|---|---|---|
| A | KR 10-2023-0145058 A (SHELL INTERNATIONALE RESEARCH MAATSCHAPPIJ B.V.) 17 October 2023 (2023-10-17)<br>See paragraphs [0020] and [0042]-[0049]; and figures 1-3. | 1-13 |
| A | US 2002-0001538 A1 (HAJDUK, Damian A. et al.) 03 January 2002 (2002-01-03)<br>See paragraphs [0011], [0075], [0076] and [0105]; and figures 6 and 15-20. | 1-13 |
| A | US 2023-0302421 A1 (SCHNEIDER ELECTRIC SYSTEMS USA, INC.) 28 September 2023 (2023-09-28)<br>See claims 1-20. | 1-13 |
| A | US 2018-0098385 A1 (SANDVIK MATERIALS TECHNOLOGY DEUTSCHLAND GMBH) 05 April 2018 (2018-04-05)<br>See claims 1-16. | 1-13 |
| A | US 4233494 A (PAWLIK, Rudolf et al.) 11 November 1980 (1980-11-11)<br>See claims 1 and 2. | 1-13 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 March 2025** | **28 March 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/020826**

| Patent document cited in search report | | | Publication date (day/month/year) | Patent family member(s) | | | Publication date (day/month/year) |
|---|---|---|---|---|---|---|---|
| KR | 10-2023-0145058 | A | 17 October 2023 | AR | 124832 | A1 | 10 May 2023 |
| | | | | CA | 3208275 | A1 | 18 August 2022 |
| | | | | CN | 116783442 | A | 19 September 2023 |
| | | | | EP | 4291845 | A1 | 20 December 2023 |
| | | | | JP | 2024-508701 | A | 28 February 2024 |
| | | | | US | 2024-0093942 | A1 | 21 March 2024 |
| | | | | WO | 2022-171603 | A1 | 18 August 2022 |
| US | 2002-0001538 | A1 | 03 January 2002 | AT | E241427 | T1 | 15 June 2003 |
| | | | | AT | E268639 | T1 | 15 June 2004 |
| | | | | AT | E327824 | T1 | 15 June 2006 |
| | | | | AU | 1999-55590 | A1 | 06 March 2000 |
| | | | | AU | 5559099 | A | 06 March 2000 |
| | | | | AU | 6533601 | A | 17 December 2001 |
| | | | | CA | 2306807 | A1 | 24 February 2000 |
| | | | | CA | 2538983 | A1 | 26 July 2002 |
| | | | | DK | 1069942 | T3 | 29 September 2003 |
| | | | | EP | 1184073 | A2 | 06 March 2002 |
| | | | | EP | 1184074 | A2 | 06 March 2002 |
| | | | | EP | 1226867 | A2 | 31 July 2002 |
| | | | | EP | 1586373 | A1 | 19 October 2005 |
| | | | | EP | 1724011 | A2 | 22 November 2006 |
| | | | | JP | 2002-119847 | A | 23 April 2002 |
| | | | | JP | 2002-143671 | A | 21 May 2002 |
| | | | | JP | 2002-316042 | A | 29 October 2002 |
| | | | | JP | 2002-522215 | A | 23 July 2002 |
| | | | | JP | 3546194 | B2 | 21 July 2004 |
| | | | | JP | 3618295 | B2 | 09 February 2005 |
| | | | | JP | 3688240 | B2 | 24 August 2005 |
| | | | | JP | 3689026 | B2 | 31 August 2005 |
| | | | | US | 2001-0034064 | A1 | 25 October 2001 |
| | | | | US | 2001-0034067 | A1 | 25 October 2001 |
| | | | | US | 2003-0156989 | A1 | 21 August 2003 |
| | | | | US | 2006-0133968 | A1 | 22 June 2006 |
| | | | | US | 6306658 | B1 | 23 October 2001 |
| | | | | US | 6727096 | B1 | 27 April 2004 |
| | | | | US | 6864092 | B1 | 08 March 2005 |
| | | | | US | 6890492 | B1 | 10 May 2005 |
| | | | | US | 7288229 | B2 | 30 October 2007 |
| | | | | WO | 00-09255 | A2 | 24 February 2000 |
| | | | | WO | 01-93998 | A2 | 13 December 2001 |
| US | 2023-0302421 | A1 | 28 September 2023 | AU | 2022-390435 | A1 | 02 May 2024 |
| | | | | CA | 3235981 | A1 | 25 May 2023 |
| | | | | EP | 4436944 | A2 | 02 October 2024 |
| | | | | US | 11697099 | B2 | 11 July 2023 |
| | | | | US | 2023-0158464 | A1 | 25 May 2023 |
| | | | | US | 2024-0024834 | A1 | 25 January 2024 |
| | | | | US | 2024-0114598 | A1 | 04 April 2024 |
| | | | | WO | 2023-091284 | A2 | 25 May 2023 |
| | | | | WO | 2024-068963 | A1 | 04 April 2024 |
| | | | | WO | 2024-068966 | A1 | 04 April 2024 |

Form PCT/ISA/210 (patent family annex) (July 2022)

## INTERNATIONAL SEARCH REPORT
### Information on patent family members

International application No.

**PCT/KR2024/020826**

| Patent document cited in search report | | | Publication date (day/month/year) | Patent family member(s) | | | Publication date (day/month/year) |
|---|---|---|---|---|---|---|---|
| | | | | WO | 2024-069232 | A1 | 04 April 2024 |
| | | | | WO | 2024-069233 | A1 | 04 April 2024 |
| | | | | WO | 2024-073655 | A1 | 04 April 2024 |
| US | 2018-0098385 | A1 | 05 April 2018 | CA | 2936372 | A1 | 02 September 2015 |
| | | | | CN | 105874878 | A | 17 August 2016 |
| | | | | CN | 108489087 | A | 04 September 2018 |
| | | | | DE | 102014102474 | A1 | 27 August 2015 |
| | | | | DK | 2926623 | T3 | 26 September 2016 |
| | | | | EP | 2926623 | A1 | 07 October 2015 |
| | | | | ES | 2586472 | T3 | 14 October 2016 |
| | | | | JP | 2017-510021 | A | 06 April 2017 |
| | | | | JP | 2018-041722 | A | 15 March 2018 |
| | | | | JP | 6194115 | B2 | 06 September 2017 |
| | | | | KR | 10-1735817 | B1 | 15 May 2017 |
| | | | | KR | 10-2016-0085921 | A | 18 July 2016 |
| | | | | KR | 10-2017-0054576 | A | 17 May 2017 |
| | | | | PL | 2926623 | T3 | 31 August 2017 |
| | | | | RU | 2016123605 | A | 20 December 2017 |
| | | | | RU | 2669589 | C1 | 12 October 2018 |
| | | | | US | 2017-0094725 | A1 | 30 March 2017 |
| | | | | US | 9867232 | B2 | 09 January 2018 |
| | | | | WO | 2015-128183 | A1 | 03 September 2015 |
| US | 4233494 | A | 11 November 1980 | DE | 000002732133 | A1 | 25 January 1979 |
| | | | | JP | 54-021642 | A | 19 February 1979 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230190927